# FASCICULE DE BREVET EUROPEEN

(11) **EP 0 900 943 B1**
(45) Date de publication et mention de la délivrance du brevet: **08.01.2003**
(21) Numéro de dépôt: 98402143.6
(22) Date de dépôt: 31.08.1998
(51) Int. Cl.: F16B 5/02, B62D 1/18

(54) **Dispositif de maintien en position d'un système de serrage de deux éléments avec sécurité d'engagement à étrier**
Einrichtung zum Halten der Position von zwei Bauteilen mit steigbügelartiger Befestigungsvorrichtung
Holding device for two elements with a fixing device with caliper

(30) Priorité: 05.09.1997 FR 9711206
(43) Date de publication de la demande: 10.03.1999
(73) Titulaire: NACAM France S.A., F-41100 Vendôme (FR)
(72) Inventeur: Fevre, Laurent, 41000 Saint Sulpice (FR); Bodin, Jean-Christophe, 41100 Saint Ouen (FR); Carrer, Alain, 41100 Vendome (FR)
(74) Mandataire: Cabinet Martinet & Lapoux

(56) Documents cités:
- EP-A- 0 755 842
- DE-C- 3 619 125

## Description

La présente invention se rapporte à un dispositif de maintien en position de deux éléments reliés par un système de serrage. Le système de serrage a un axe de serrage, qui traverse chacun des deux éléments. Ce dispositif de maintien en position est notamment applicable à une colonne de direction de véhicule automobile, la colonne de direction étant réglable en hauteur et/ou en profondeur dans le plan vertical.

Dans une colonne de direction réglable de véhicule automobile, le système de réglage en hauteur dans le plan vertical, ou en profondeur dans le plan vertical, demande un maintien de la position choisie par le conducteur. Dans les dispositifs connus comme le dispositif décrit dans EP-A-0 755 842, il est prévu d'ajouter au système de serrage du système de réglage en position un dispositif de dents métalliques, qui sont reliées respectivement aux deux éléments à serrer, de manière que les dents métalliques rentrent en contact les unes dans les autres, afin qu'elles garantissent ainsi le maintien de la position choisie. Ces dents sont agencées d'une part sur une crémaillère fixe faisant partie de l'élément support, et d'autre part sur une crémaillère montée sur le système de réglage mobile. Dans certaines positions de réglage en hauteur, il arrive lors du verrouillage, que les sommets des dents de la crémaillère mobile viennent en contact avec les sommets des dents de la crémaillère fixe. Le système à crémaillère se trouve alors dans une position d'équilibre instable conduisant à deux situations :
- les sommets de dents restent en équilibre, le système de verrouillage ne peut fonctionner, et il est impossible de verrouiller le système de réglage de la colonne ;
- avec l'augmentation de l'effort au levier de manoeuvre, les sommets de dents quittent cette position instable et se placent dans une position à l'intérieur des creux, le système peut alors se verrouiller. Cependant ce passage de l'état d'équilibre à l'état verrouillé se fait avec un léger choc dans le système de crémaillère, et cela induit d'une part un bruit de craquement, et d'autre part une sensation de "point dur" dans le levier de manoeuvre. Ces phénomènes, bien que sans incidence sur le fonctionnement du système de verrouillage, sont ressentis comme étant désagréables, et peuvent être considérés comme inacceptables. En effet, de tels phénomènes sont préjudiciables à la tenue mécanique du dispositif, et donnent une impression d'insécurité au conducteur.

Le but de la présente invention est de présenter un dispositif de maintien en position, qui évite les inconvénients décrits ci-dessus, et qui s'intègre facilement dans les colonnes de direction existantes, tout en garantissant le maintien en position du système de serrage considéré.

Selon l'invention, La sécurité d'engagement du dispositif de maintien en position d'un premier élément par rapport à un deuxième élément selon l'invention a une structure, dans laquelle le premier élément et le deuxième élément considéré comme fixe sont reliés par un système de serrage. Le système de serrage a un axe de serrage, qui traverse les deux éléments.

Le dispositif de maintien comprend une crémaillère montée contre le deuxième élément, appelée crémaillère fixe, et une crémaillère reliée au premier élément et appelée crémaillère mobile, de manière que les crémaillères fixe et mobile puissent s'engager l'une dans l'autre en position verrouillée du système de serrage. L'axe de serrage traverse la crémaillère mobile et la crémaillère fixe. Un ressort de rappel est disposé entre les crémaillères fixe et mobile, afin de provoquer l'écartement desdites crémaillères en position déverrouillée du système de serrage.

Le dispositif de maintien est caractérisé en ce qu'il comporte :
- un moyen élastique additionnel monté sur l'axe de serrage, ledit moyen élastique additionnel étant disposé contre la crémaillère mobile, et du côté d'un moyen de serrage monté à une extrémité de l'axe de serrage ; et
- un étrier monté sur l'axe de serrage entre le moyen élastique additionnel et ledit moyen de serrage;
- le moyen élastique additionnel et l'étrier étant conformés et agencés de façon qu'en position verrouillée du système de serrage :
   . l'étrier vienne en appui contre le deuxième élément, et
   . le moyen élastique additionnel prenne appui contre ledit étrier disposé contre ledit moyen de serrage, et agisse sur la crémaillère mobile afin d'assurer la pénétration complète de la crémaillère mobile dans la crémaillère fixe.

Avantageusement, selon un mode de réalisation l'invention, le dispositif de maintien en position avec la sécurité d'engagement comporte un étrier qui a une structure décrite ci-après.

Une embase de l'étrier a des ailes s'étendant à des extrémités de l'embase. Les deux ailes sont sensiblement perpendiculaires à cette embase afin que l'étrier ait une section en forme de U. L'embase comporte également un trou à travers lequel l'axe de serrage passe.

Les deux ailes de l'étrier sont à une distance l'une de l'autre qui est supérieure à la largeur de chacune des crémaillères fixe et mobile de manière que la crémaillère mobile reliée au premier élément puisse se monter dans l'étrier, et que en position verrouillée du système de serrage, les ailes de l'étrier entourent la crémaillère fixe montée contre le deuxième élément, et s'appuient contre le deuxième élément fixe afin d'obtenir une butée positive du système de serrage.

Selon un autre mode de réalisation invention, le moyen élastique additionnel comprend un ressort de compression en forme de coupelle. Ce ressort additionnel est monté sur l'axe du système de serrage, et est logé dans l'étrier entre l'embase de l'étrier et la crémaillère mobile reliée au premier élément.

Dans l'agencement prévu, le ressort de rappel disposé entre les deux crémaillères, est un ressort en tôle souple qui comporte une portion centrale dans laquelle est ménagée un trou de passage à travers lequel l'axe de serrage passe, la portion centrale étant disposée contre la crémaillère mobile reliée au premier élément. Le ressort en tôle souple comporte également des portions recourbées souples sur des côtés opposés respectifs de la portion centrale, les portions souples s'appuyant sur la crémaillère fixe montée sur le deuxième élément. Le ressort en tôle souple comprend encore deux languettes qui s'étendent vers la crémaillère mobile reliée au premier élément, de façon que les deux languettes s'engagent respectivement dans des encoches ménagées dans la crémaillère mobile de façon à relier en rotation le ressort de rappel avec la crémaillère mobile.

Le dispositif de maintien en position avec une sécurité d'engagement selon l'invention peut notamment s'appliquer à une colonne de direction de véhicule automobile. Dans cette structure :
- le premier élément est un tube-corps de colonne de direction de véhicule automobile, ladite colonne étant réglable dans au moins l'une de directions de réglage en hauteur et/ou en profondeur dans le plan vertical ;
- un arbre de direction est monté libre en rotation dans ledit tube-corps ;
- le deuxième élément est un élément support fixé au châssis du véhicule ; et
- dans un système de réglage en position de la colonne de direction, le tube-corps ou premier élément est disposé dans l'élément support ou deuxième élément, le système de serrage est en position déverrouillée, le premier élément est placé à une position désirée par rapport au deuxième élément au moyen du système de réglage, et le premier élément est bloqué par rapport au deuxième élément en position verrouillée par le système de serrage.

Dans un autre mode de réalisation de l'invention, la crémaillère fixe qui est fixée au deuxième élément ou élément support, est constituée par une plaque qui comporte :
- une face d'appui qui est munie de plots de positionnement pour la positionner dans le deuxième élément ;
- deux faces de contact qui sont orientées dans la direction de réglage et qui sont disposées le long de côtés opposés respectifs d'un trou oblong à travers lequel l'axe du système de serrage passe, et permettant le débattement dudit axe de serrage lors du réglage en position ;
- deux chemins qui sont munis de dents orientés dans la direction de réglage, et s'étendant le long des faces de contact respectivement.

La crémaillère mobile qui est reliée au premier élément, est constituée par une plaque qui comporte :
- un trou à travers lequel l'axe de serrage passe;
- une face d'appui pour le moyen élastique additionnel ;
- deux faces de contact du ressort de rappel disposées autour du trou de passage ;
- deux chemins munis de dents orientés dans la direction de réglage, et s'étendant le long des faces de contact respectivement ; et
- deux encoches centrales opposées l'une à l'autre, qui sont destinées à recevoir les deux languettes du ressort de rappel respectivement.

Une réalisation particulièrement intéressante des crémaillères selon l'invention consiste en ce que chacune des crémaillères fixe et mobile comporte des dents dissymétriques. Chacune des dents a deux flancs très peu inclinés par rapport à un plan perpendiculaire aux faces de contact de crémaillère. Les flancs de chaque dent forment un angle de flanc inférieur à l'angle correspondant à un coefficient de frottement des deux crémaillères l'une par rapport à l'autre.

De plus, il est particulièrement intéressant que les deux chemins de chaque crémaillère aient des dents dont les angles de flancs sont opposés afin de pouvoir s'opposer à tout effort vertical longitudinal au crémaillère, c'est-à-dire dirigé vers le haut ou dirigé vers le bas.

La crémaillère mobile et la crémaillère fixe peuvent être en acier fritté. La crémaillère fixe peut également être dans une autre variante en matière thermoplastique renforcée par des fibres de verre.

Le moyen élastique additionnel peut être réalisé sous différentes formes de ressort de compression : une coupelle, au moins une rondelle élastique dite rondelle "Belleville", un ressort à spires cylindriques, un ressort à spires coniques, ou bien un ressort de compression en tôle souple.

La sécurité d'engagement du dispositif de maintien en position d'un système de serrage de deux éléments selon l'invention permet d'assurer le réglage radial et/ou axial, tout en éliminant les problèmes de dent sur dent et de craquement, qui existent sur les systèmes actuels ainsi que les sensations de "points durs" qui apparaissent dans le levier de manoeuvre.

D'autres caractéristiques et avantages de l'invention ressortiront de la description détaillée suivante de plusieurs réalisations préférées de l'invention en référence aux dessins annexés dans lesquels :
- la figure 1 est une vue en perspective du dispositif de maintien en position de deux éléments selon l'invention appartenant à une colonne de direction de véhicule automobile ;
- la figure 2 est une coupe prise le long de la ligne II-II de la figure 1, du système de serrage en position verrouillée ;
- la figure 3 est une coupe partielle correspondant à la figure 2, du système de serrage en position déverrouillée ;
- la figure 4 est une coupe prise le long de la ligne IV-IV de la figure 3 ;
- la figure 5 est une coupe analogue à la figure 3, du système de serrage en position verrouillée ;
- la figure 6 est une coupe prise le long de la ligne VI-VI de la figure 5 ;
- la figure 7 est une coupe analogue à la figure 5, du système de serrage en position verrouillée avec crémaillères en contact dents sur dents ;
- la figure 8 est une vue d'un ressort de rappel;
- la figure 9 est une vue de dessus du ressort de rappel de la figure 8 ;
- la figure 10 est une vue d'une crémaillère fixe représentée dans les figures 1 à 7 ;
- la figure 11 est une coupe prise le long de la ligne XI-XI de la figure 10 ;
- la figure 12 est une vue d'une crémaillère mobile représentée dans les figures 1 à 7 ;
- la figure 13 est une coupe prise le long de la ligne XIII-XIII de la figure 12 ;
- la figure 14 est une vue de détail de dents des crémaillères ;
- la figure 15 est une vue analogue à la figure 10 d'une autre réalisation de la crémaillère fixe ;
- la figure 16 est une vue en coupe d'une première réalisation d'un moyen élastique additionnel;
- la figure 17 est une vue en coupe d'une autre réalisation du moyen élastique additionnel;
- la figure 18 est une vue de côté d'une troisième réalisation du moyen élastique additionnel;
- la figure 19 est une vue de côté d'une quatrième réalisation du moyen élastique additionnel; et
- les figures 20 et 21 sont des vues de côté et de face d'une cinquième réalisation du moyen élastique additionnel en tôle souple.

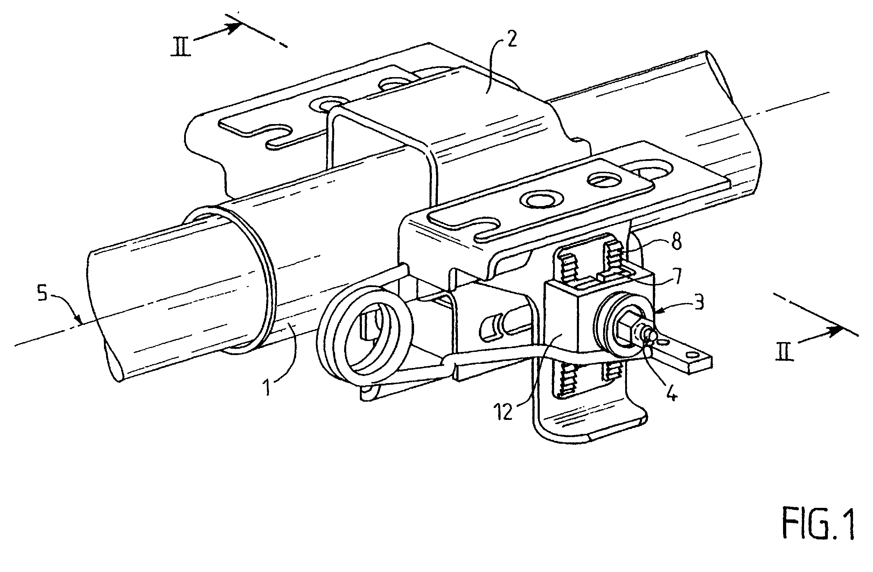

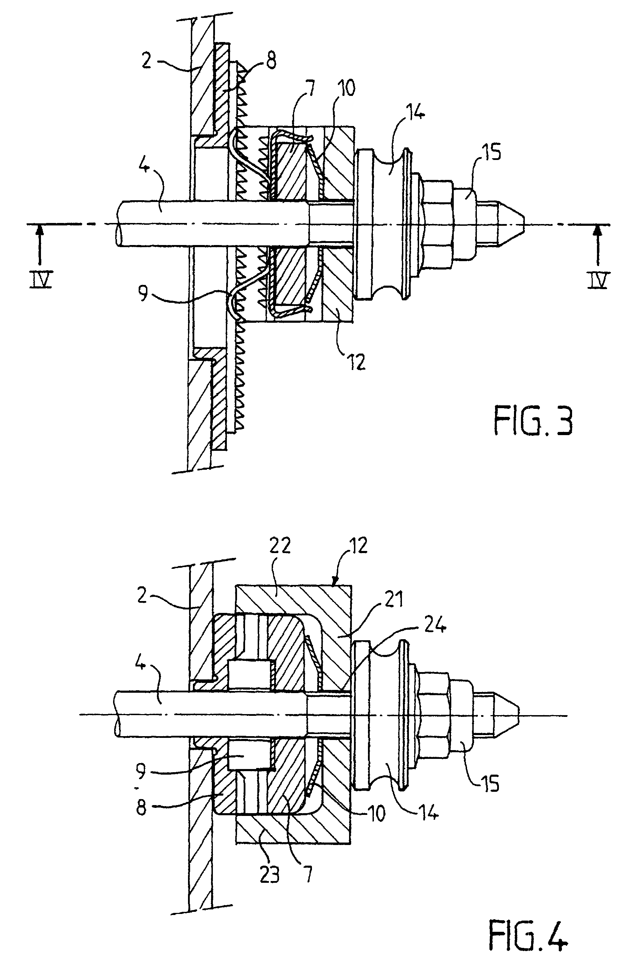

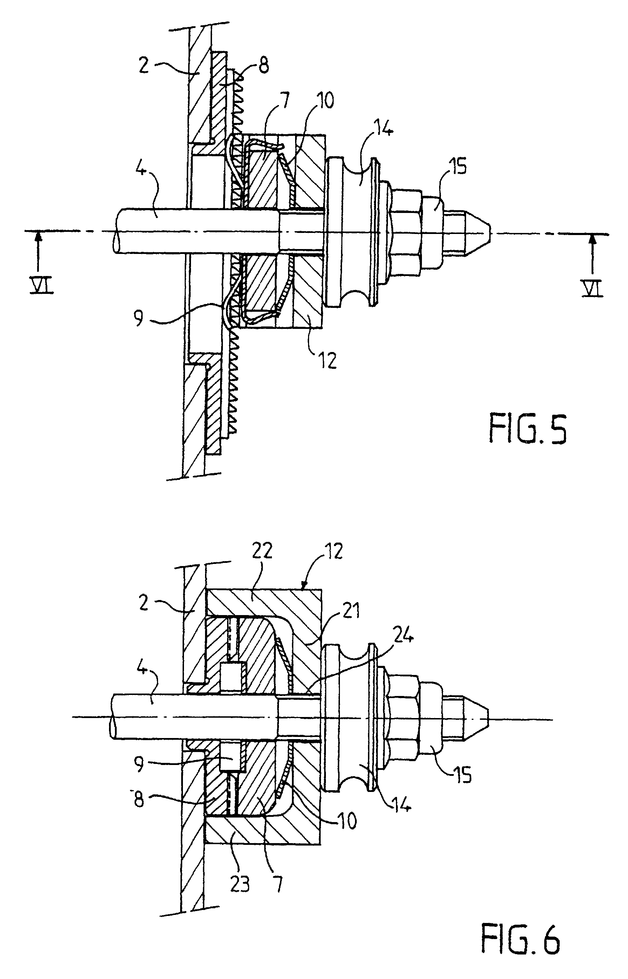

Comme on peut le voir sur les figures 1 à 7, le dispositif de maintien en position maintient un premier élément 1 en position par rapport à un deuxième élément 2 considéré comme fixe, l'élément 1 et l'élément 2 étant reliés par un système de serrage 3. Le système de serrage 3 a un axe de serrage 4, tel qu'une tige filetée, qui traverse les éléments 1 et 2. Le système de maintien en position proprement dit comprend une crémaillère 8 qui est montée contre l'élément 2 considéré comme fixe et appelée crémaillère fixe 8, et une crémaillère 7 qui est reliée à l'élément 1 et appelée crémaillère mobile 7. L'axe de serrage 4 traverse la crémaillère mobile 7 et la crémaillère fixe 8. Les crémaillères 7 et 8 sont agencées et disposées de manière qu'elles puissent s'engager l'une dans l'autre en position verrouillée. Un ressort de rappel 9 est disposé entre la crémaillère mobile 7 et la crémaillère fixe 8, afin de provoquer l'écartement des crémaillères 7 et 8 l'une par rapport à l'autre en position déverrouillée comme cela est représenté sur les figures 3 et 4.

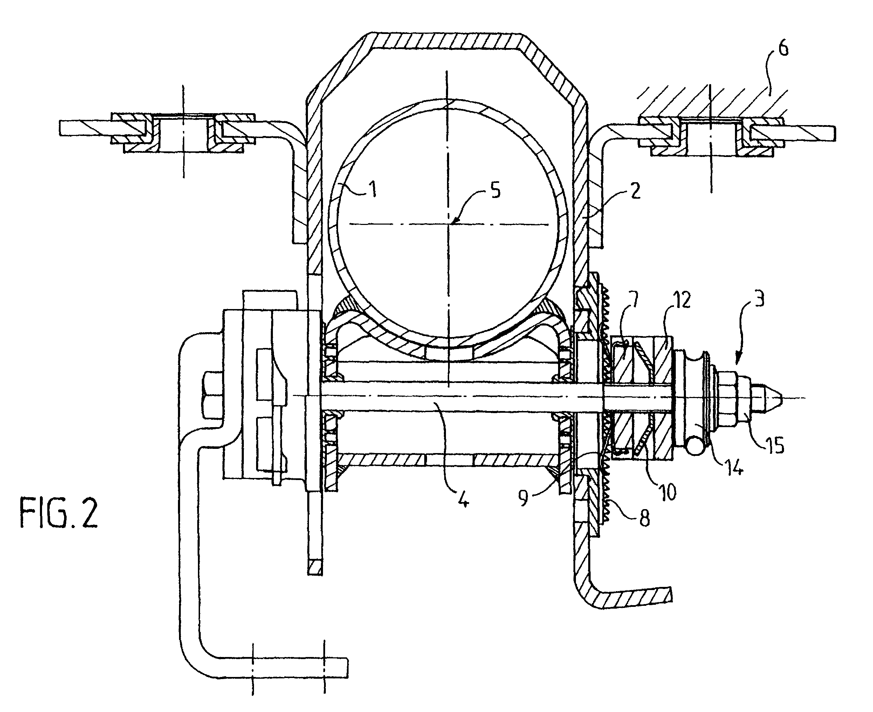

La sécurité d'engagement du dispositif de maintien en position est assurée par un moyen élastique additionnel 10, qui coopère avec un étrier 12. Le moyen élastique additionnel 10 et l'étrier 12 sont montés l'un et l'autre sur l'axe 4 du système de serrage 3. Le moyen élastique additionnel 10 est disposé contre la crémaillère mobile 7 montée sur l'axe 4 du système de serrage 3, et du côté d'un ensemble à butée et écrou 14-15 monté à l'extrémité filetée de l'axe 4 du système de serrage 3. L'étrier 12 est disposé entre le moyen élastique additionnel 10 et l'ensemble à butée et écrou 14-15. Ainsi le moyen élastique additionnel 10 s'applique d'une part contre l'étrier 12 et d'autre part contre la crémaillère mobile 7. Le moyen élastique additionnel 10 et l'étrier 12 sont conformés et agencés de façon qu'en position verrouillée du système de serrage 3, comme cela est représenté sur les figures 2, 5 et 6,
- l'étrier 12 vienne en appui contre l'élément support 2,
- que le moyen élastique additionnel 10 prenne appui contre ledit étrier 12, disposé contre l'ensemble à écrou et rondelle 14-15, et que le moyen élastique additionnel 10 agisse sur la crémaillère mobile 7, afin d'assurer la pénétration complète de la crémaillère mobile 7 dans la crémaillère fixe 8.

Le dispositif de maintien en position selon l'invention s'applique notamment à une colonne de direction de véhicule automobile représentée sur les figures 1 et 2, et dans laquelle :
- l'élément 1 est un tube corps de colonne de direction de véhicule automobile, ladite colonne étant réglable en hauteur et/ou en profondeur dans le plan vertical ;
- un arbre de direction 5 est monté libre en rotation dans le tube corps ;
- l'élément 2 est un élément support fixé au châssis du véhicule 6 ;
- un système de réglage pour régler en position de la colonne de direction est agencé de manière que le tube corps ou élément 1 soit disposé dans l'élément support 2, que le système de serrage soit en position déverrouillée, que l'élément 1 soit placé à la position désirée par rapport à l'élément 2 au moyen du système de réglage, et que l'élément 1 soit bloqué par rapport à l'élément 2 en position verrouillée par le système de serrage 3.

L'étrier 12 comme cela est représenté notamment sur les figures 3 à 6 comporte une embase 21 dans laquelle est ménagée un trou de passage 24 de l'axe de serrage 4. Une aile respective 22, 23 est disposée à chaque extrémité de l'embase 21. Les deux ailes 22 et 23 sont sensiblement perpendiculaires à l'embase 21, afin que l'étrier soit en forme de U. Les deux ailes 22 et 23 sont à une distance l'une de l'autre supérieure à la largeur de chacune des deux crémaillères 7 et 8. Afin que la crémaillère mobile 7 reliée à l'élément 1 puisse se monter dans le logement de l'étrier 12, et lors du blocage en position verrouillée du système de serrage 3, les ailes 22 et 23 de l'étrier 12 viennent entourer la crémaillère fixe 8 montée contre l'élément 2 et viennent s'appuyer contre l'élément 2 afin d'obtenir une butée positive du serrage comme cela est représenté sur les figures 2, 5 et 6.

Le moyen élastique additionnel 10 comprend un ressort de compression qui a une forme de coupelle. Ce ressort additionnel 10 est monté sur l'axe 4 du système de serrage 3, et est logé dans l'étrier 12, entre l'embase 21 de l'étrier 12 et la crémaillère mobile 7 reliée à l'élément 1 et montée sur l'axe de serrage 3. Ainsi le ressort additionnel 10 s'applique d'une part contre l'embase 21 de l'étrier 12, et d'autre part contre la crémaillère mobile 7.

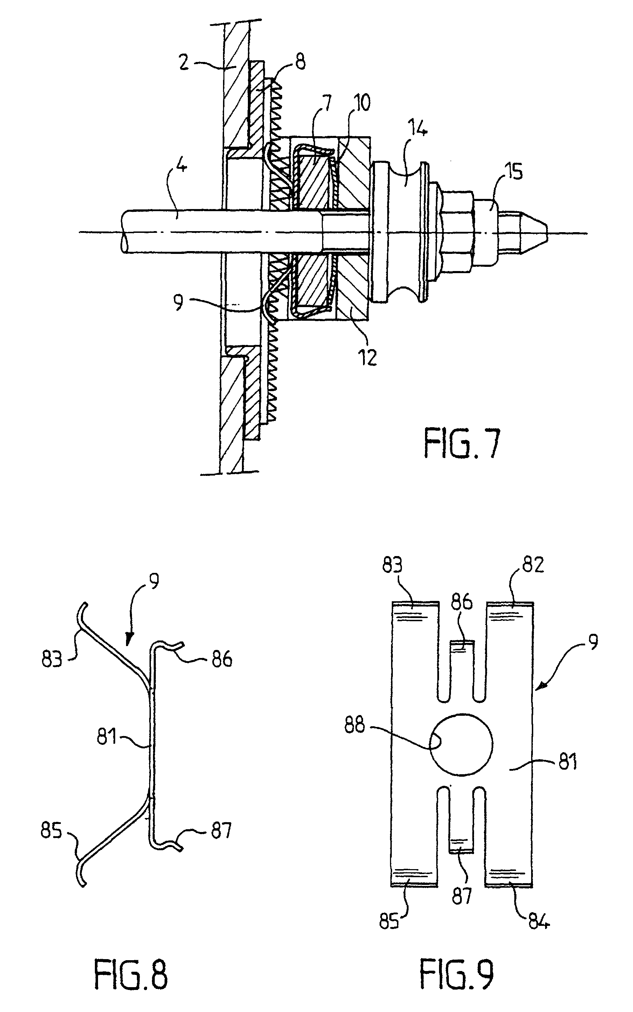

Le ressort de rappel 9 est disposé entre la crémaillère fixe 8 et la crémaillère mobile 7, afin de permettre et d'assurer l'écartement des deux crémaillères 7 et 8 l'une par rapport à l'autre lorsque le système de serrage 3 est en position déverrouillée. Comme on peut le voir sur les figures 8 et 9, le ressort de rappel 9 est un ressort en tôle souple. Cette tôle souple comporte un trou 88 à travers lequel passe l'axe de serrage 4. Le trou 88 est réalisé dans une portion centrale 81 du ressort 9 qui est disposée contre la crémaillère mobile 7 reliée à l'élément 1. Le ressort en tôle souple 9 comporte autour de cette partie centrale 81 des portions recourbées souples 82, 83, 84 et 85, autour et de part et d'autre de la portion centrale 81. Les portions recourbées souples 82, 83, 84 et 85 s'appuient sur la crémaillère fixe 8 montée contre l'élément 2. Le ressort de rappel 9 comporte deux languettes 86 et 87 disposées du côté de la crémaillère mobile 7 reliée à l'élément 1. Les languettes 86 et 87 sont situées de part et d'autre de la position centrale 81 et respectivement entre les portions recourbées souples 82 et 83 et les portions recourbées souples 84 et 85. Les extrémités des languettes 86 et 87 s'engagent respectivement dans des encoches 49 et 50 qui sont ménagées dans des côtés de la crémaillère mobile 7, de façon à relier en rotation le ressort de rappel 9 avec la crémaillère mobile 7.

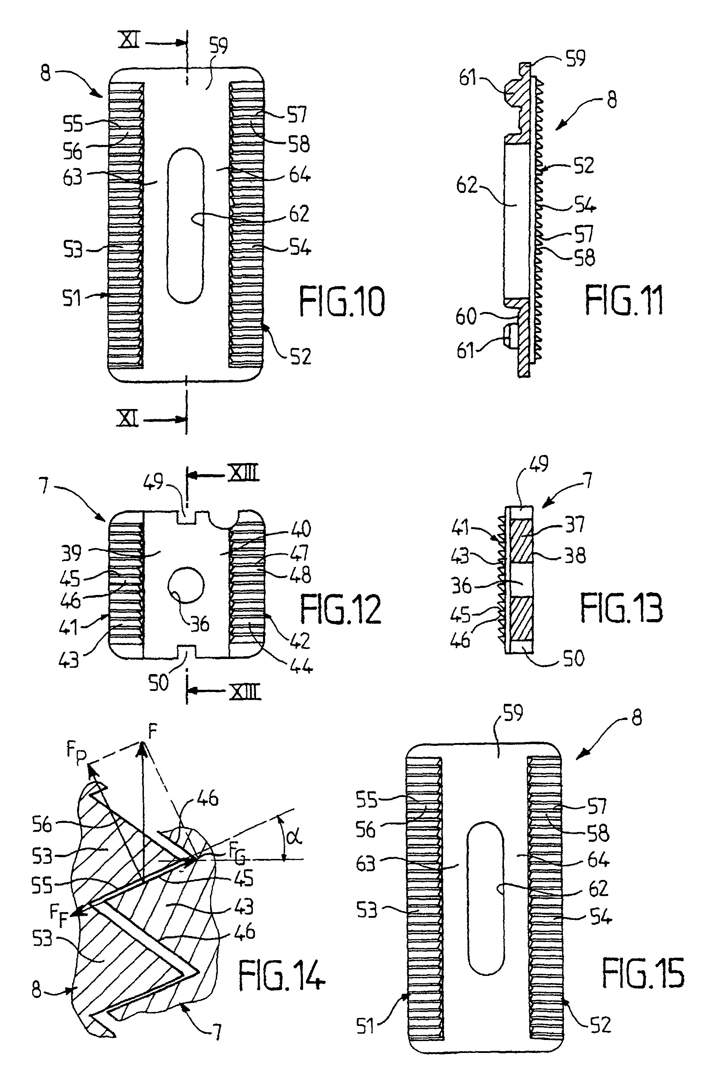

La réalisation de la crémaillère fixe 8 est représentée sur les figures 10 et 11. La crémaillère fixe 8 qui est montée contre l'élément support 2, comprend une plaque 59 qui comporte :
- une face d'appui 60 munie de plots de positionnement 61 pour la positionner sur l'élément 2,
- deux faces de contact 63 et 64, qui sont orientées dans la direction de réglage, et qui sont disposées de part et d'autre d'un trou oblong 62 à travers lequel l'axe 4 du système de serrage 3 passe, et qui permet le débattement dudit axe 4 lors du réglage en position ;
- deux chemins 51 et 52 munis de dents 53 et 54, chacun des chemins 51 et 52 étant orienté dans la direction de réglage et étant aménagé le long de la face de contact respective 63, 64.

La réalisation de la crémaillère mobile 7 est représentée sur les figures 12 et 13. La crémaillère mobile 7 qui est reliée à l'élément 1, comprend une plaque 37 qui comporte un trou 36 à travers lequel l'axe de serrage 4 passe. La plaque 37 a d'une part une face d'appui 38 pour le ressort additionnel 10, et d'autre part deux faces de contact 39 et 40 pour le ressort de rappel 9. Les deux faces de contact 39 et 40 sont disposées autour du trou de passage 36. La crémaillère proprement dite est composée de deux chemins 41 et 42 munis de dents respectives 43 et 44. Chacun des chemins 41 et 42 est orienté dans la direction de réglage, et est aménagé le long de la face de contact correspondante 39 et 40. Les deux encoches centrales 49 et 50 opposées l'une à l'autre sont destinées à recevoir les deux languettes 86 et 87 du ressort de rappel 9.

Dans la position verrouillée représentée sur les figures 2, 5 et 6, une tension est appliquée dans la tige filetée qui constitue l'axe de serrage 4 du système de serrage 3. Cette tension peut être appliquée par un dispositif à came. La tension est retransmise à l'étrier 12 par l'intermédiaire de l'ensemble à butée et écrou 14-15 monté à l'extrémité filetée de l'axe de serrage 3 et qui comporte un écrou 15 et une butée à aiguille 14. Cette tension plaque alors l'étrier 12 contre le montant de l'élément support 2.

Dans la position verrouillée normale qui est représentée sur les figures 2, 5 et 6, et lorsque l'étrier 12 est plaqué contre le montant de élément support 2, le ressort additionnel 10 pousse la crémaillère mobile 7 contre la crémaillère fixe 8. L'effort créé par le ressort additionnel 10 sur la crémaillère mobile 7 étant supérieur à l'effort créé par le ressort de rappel 9, la crémaillère mobile 7 engrène complètement dans la crémaillère fixe 8, et ceci assure ainsi le verrouillage positif du système de serrage.

La figure 7 représente le cas où lorsque le système est en position verrouillée, la crémaillère mobile 7 et la crémaillère fixe 8 se trouvent en contact dent sur dent. Si, lors du verrouillage, les dents des crémaillères 7 et 8 se trouvent dans une position telle qu'elles restent en équilibre sommet de dent sur sommet de dent, c'est le ressort additionnel 10 qui se trouve comprimé. L'étrier 12 vient alors se plaquer contre le montant de l'élément support 2, sans exercer sur les dents des crémaillères un effort important et sans transmettre dans le levier de manoeuvre une sensation de blocage. Un léger mouvement de l'étrier 12, en début de choc lors d'un accident par exemple, fera passer les dents des crémaillères 7 et 8 de leur position d'équilibre instable à une position d'équilibre stable. Cette position d'équilibre stable correspond à la position des sommets de dents à l'intérieur des creux de dents. Ce mouvement est obtenu par l'action du ressort additionnel 10, qui est resté en pression. Le système se trouve alors en position de blocage positif.

Lors du déverrouillage du système de serrage, la tige filetée de serrage 4 se déplace, ce qui écarte l'écrou 15 du montant de l'élément support 2 d'une distance suffisante. Le ressort de rappel 9 écarte les deux crémaillères 7 et 8 l'une par rapport à l'autre pour permettre leur déplacement relatif sans contact des dents. La crémaillère mobile 7 est plaquée contre le ressort additionnel 10, qui est lui-même plaqué contre l'embase 21 de l'étrier 12.

En position verrouillée, la crémaillère mobile 7 est plaquée contre la crémaillère fixe 8 par le ressort additionnel 10. Le système de serrage peut, lors d'un effort vertical suffisant, et si l'angle des dents de crémaillère est important, être réversible, c'est-à-dire que le blocage ne serait plus positif. Pour cela, il est intéressant de prévoir des dents de crémaillère dissymétriques comme cela est décrit ci-après.

De façon à assurer un blocage positif, tout en ayant un profil de dent permettant un engrènement facile, il est choisi un angle de dent tel que le frottement assure l'irréversibilité. Pour cela, le coefficient de frottement de la crémaillère mobile 7 sur la crémaillère fixe 8 est représenté par la tangente d'un angle que nous appellerons ϕ. Nous appelons α l'angle des flancs des dents très peu inclinées par rapport au plan perpendiculaire aux faces de contact 39 et 40 ou 63 et 64. En se reportant à la figure 14, on a alors les équations ci-après :
F_{F} > F_{G} ==> tgϕ.cosα.F > sinα.F
tgϕ > tg α
ϕ > α,
avec
- F :: effort de poussée verticale.
- F_{G} :: effort de glissement lié au profil des dents.
F_{G} = sinα.F
- F_{F} :: effort de frottement.
F_{F} = tgϕ.F_{P} = tgϕ.cosα.F.

Le coefficient de frottement courant étant compris entre 0,1 et 0,4, soit ϕ compris entre 6° et 20°, on choisira un angle de dent de 5°.

Pour des raisons pratiques de réalisation et de tenue, on évitera de faire une dent symétrique de demi-angle au sommet 5° et on choisira une dent dissymétrique, telle que celle représentée sur la figure 14.

Les dents sont orientées de telle sorte que le système de serrage assure un blocage positif lorsque l'effort est dans une direction verticale vers le haut, qui correspond à la situation du choc.

Vers le bas, la tenue est assurée par l'adhérence du carré renfort sur le montant de l'élément support, ce qui est normalement suffisant.

On peut également afin d'améliorer encore les prestations de l'invention agencer les crémaillères de façon que les deux chemins de chacune des crémaillères ont des dents 43 et 44, 53 et 54 dont les angles des flancs 45 et 46, 55 et 56, dans l'un 41, 51 des chemins de crémaillère sont disposés de façon opposée aux angles des flancs 47 et 48, 57 et 58 dans l'autre chemin de crémaillère 42, 52. Ceci permet de s'opposer à tout effort vertical, c'est-à-dire longitudinalement aux crémaillères, qu'il soit dirigé vers le haut ou qu'il soit dirigé vers le bas. Un exemple de réalisation d'une de ces crémaillères est représenté sur la figure 15.

Dans d'autres variantes de réalisation de l'invention, la crémaillère mobile 7 et la crémaillère fixe 8 sont en acier fritté. La crémaillère fixe 8 peut également être en matière thermoplastique renforcée par des fibres de verre ou analogues.

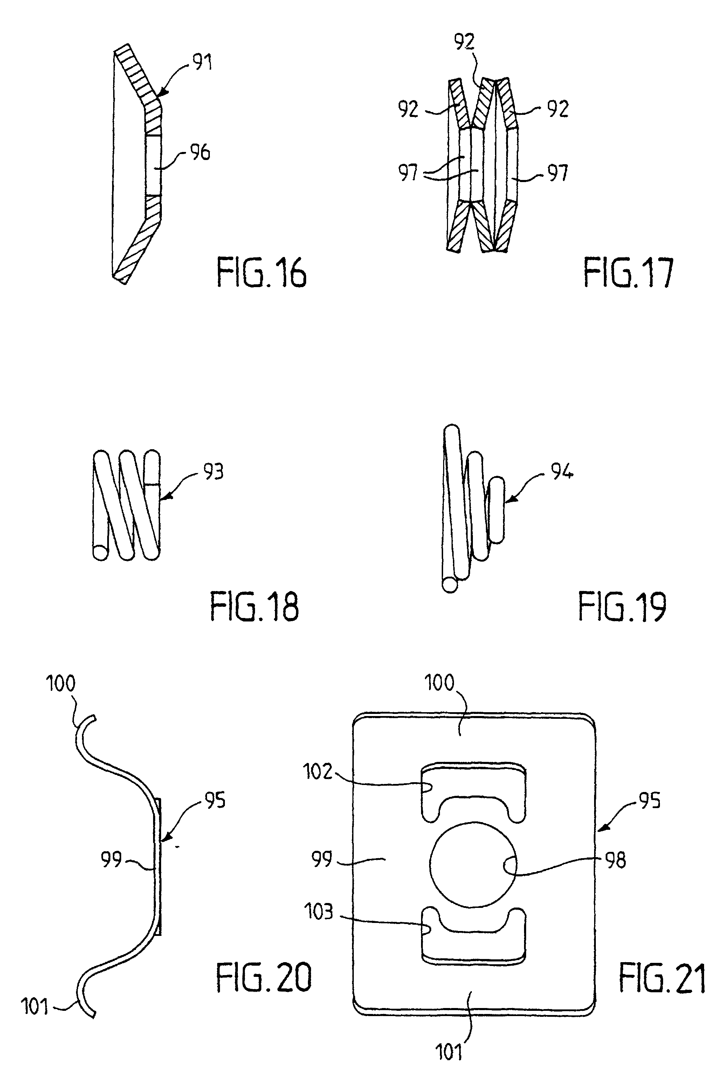

Le moyen élastique additionnel 10 peut être réalisé sous différentes formes de ressort de compression : une coupelle 91 avec un trou de passage 96 représentée sur la figure 16, des rondelles élastique commune des rondelles "Belleville" 92 avec un trou de passage d'axe 97 représentées sur la figure 17, un ressort de compression à spires cylindriques 93 représenté sur la figure 18, un ressort de compression à spires coniques 94 représenté sur la figure 19, ou bien un ressort de compression en tôle souple 95 représenté sur les figures 20 et 21. Le ressort 95 comporte :
- un trou de passage 98 de l'axe de serrage 4 dans une portion centrale 99,
- des portions recourbées souples 100 et 101 localisées de chaque côté de la portion centrale 99, et comportant chacune une lumière 102 ou 103.

## Revendications

1. Dispositif de maintien en position d'un premier élément (1) par rapport à un deuxième élément (2) considéré comme fixe, les premier élément (1) et deuxième élément (2) étant reliés par un système de serrage (3) ayant un axe de serrage (4) traversant les deux éléments (1, 2),
- le dispositif de maintien comprenant une crémaillère fixe (8) montée contre le deuxième élément (2) et une crémaillère mobile (7) reliée au premier élément (1), de manière que la crémaillère mobile (7) et la crémaillère fixe (8) puissent s'engager l'une dans l'autre en position verrouillée,
- l'axe de serrage (4) traversant la crémaillère mobile (7) et la crémaillère fixe (8),
- un ressort de rappel (9) étant disposé entre les crémaillères (7, 8) afin de provoquer l'écartement desdits crémaillères (7, 8) en position déverrouillée,
**caractérisé en ce qu'**il comporte :
- un moyen élastique additionnel (10) monté sur l'axe de serrage (4), ledit moyen élastique additionnel (10) étant disposé contre la crémaillère mobile (7), et du côté d'un moyen de serrage (15) monté à une extrémité de l'axe de serrage (4) ; et
- un étrier (12) monté sur l'axe de serrage (4) entre le moyen élastique additionnel (10) et ledit moyen de serrage (15) ;
- le moyen élastique additionnel (10) et l'étrier (12) étant conformés et agencés de façon qu'en position verrouillée du système de serrage (3) l'étrier (12) vienne en appui contre le deuxième élément (2), et le moyen élastique additionnel (10) prenne appui contre ledit étrier (12) disposé contre ledit moyen de serrage (15), et agisse sur la crémaillère mobile (7) afin d'assurer la pénétration complète de la crémaillère mobile (7) dans la crémaillère fixe (8).

2. Dispositif de maintien en position selon la revendication 1, **caractérisé en ce que** l'étrier (12) ayant une section en forme de U comprend :
- une embase (21),
- un trou (24) à travers lequel l'axe de serrage (4) passe,
- des ailes (22, 23) s'étendant depuis des extrémités de l'embase (21) et sensiblement perpendiculaires à ladite embase,
- les ailes (22, 23) étant à une distance l'une de l'autre supérieure à la largeur de chacune des crémaillères (7, 8) de manière que la crémaillère mobile (7) puisse se monter dans l'étrier (12), et
- en position verrouillée du système de serrage (3), les ailes (22, 23) de l'étrier (12) entourant la crémaillère fixe (8) afin d'obtenir une butée positive du système de serrage (3).

3. Dispositif de maintien en position selon la revendication 2, **caractérisé en ce que** le moyen élastique additionnel (10) comprend un ressort de compression en forme de coupelle (91) qui est monté sur l'axe de serrage (4), et qui est logé dans l'étrier (12), entre l'embase (21) de l'étrier (12) et la crémaillère mobile (7).

4. Dispositif de maintien en position selon l'une quelconque des revendications 1 à 3, **caractérisé en ce que** le ressort de rappel (9) disposé entre les crémaillères (7, 8) est un ressort en tôle souple qui comporte :
- une portion centrale (81) dans laquelle est ménagée un trou de passage (88) à travers lequel l'axe de serrage (4) passe, la portion centrale (81) étant disposée contre la crémaillère mobile (7),
- des portions recourbées souples (82, 83, 84, 85) agencées de part et d'autre de ladite portion centrale (81), les portions recourbées souples (82, 83, 84, 85) s'appuyant sur la crémaillère fixe (8), et
- deux languettes (86, 87) s'étendant vers la crémaillère mobile (7), de manière que lesdites deux languettes (86, 87) s'engagent respectivement dans des encoches (49, 50) ménagées dans ladite crémaillère mobile (7) de façon à relier en rotation le ressort de rappel (9) avec ladite crémaillère mobile (7).

5. Dispositif de maintien en position selon l'une quelconque des revendications précédentes, **caractérisé en ce que** :
- le premier élément (1) est un tube-corps de colonne de direction de véhicule automobile, ladite colonne étant réglable dans au moins l'une de directions de réglage en hauteur et en profondeur dans le plan vertical ;
- un arbre de direction (5) est monté libre en rotation dans ledit tube-corps ;
- le deuxième élément (2) est un élément support fixé au châssis du véhicule (6) ; et
- dans un système de réglage en position de la colonne de direction, le premier élément (1) est disposé dans le deuxième élément (2), le système de serrage est en position déverrouillée, le premier élément (1) est placé à une position désirée par rapport au deuxième élément (2) au moyen du système de réglage, et le premier élément (1) est bloqué par rapport au deuxième élément (2) en position verrouillée par le système de serrage (3).

6. Dispositif de maintien en position selon la revendication 1 à 5, **caractérisé en ce que** la crémaillère fixe (8) qui est montée contre le deuxième élément (2) est constituée par une plaque (59) qui comporte :
- une face d'appui (60), qui est munie de plots de positionnement(61) dans le deuxième élément (2),
- deux faces de contact (63, 64) qui sont orientées dans la direction de réglage, et qui sont disposées le long de côtés opposés d'un trou oblong (62) permettant le passage de l'axe de serrage (4) et le débattement dudit axe de serrage (4) lors du réglage en position ; et
- deux chemins (51, 52) munis de dents (53, 54), orientés dans la direction de réglage et s'étendant le long des faces de contact (63, 64) respectivement.

7. Dispositif de maintien en position selon la revendication 5, **caractérisé en ce que** la crémaillère mobile (7), qui est reliée au premier élément (1), est constituée par une plaque (37) qui comporte :
- un trou (36) à travers lequel l'axe de serrage (4) passe,
- une face d'appui (38) pour le moyen élastique additionnel (10),
- deux faces de contact (39) et (40) du ressort de rappel (9) disposées autour du trou de passage (36),
- deux chemins (41, 42) munis de dents (43, 44), orientés dans la direction de réglage, et s'étendant le long des faces de contact (39, 40) respectivement, et
- deux encoches centrales (49, 50) opposées l'une à l'autre, destinées à recevoir les deux languettes (86, 87) du ressort de rappel (9) respectivement.

8. Dispositif de maintien en position selon la revendication 6 ou 7, **caractérisé en ce que** chacune des crémaillères (7, 8) comprend des dents (43, 44 ; 53, 54) dissymétriques ayant chacune des flancs (45, 47 ; 55, 57) qui sont très peu inclinés par rapport à un plan perpendiculaire aux faces de contact de crémaillère (39, 40 ; 63, 64), et qui forment un angle de flancs (α) inférieur à l'angle correspondant à un coefficient de frottement des deux crémaillères (7, 8) l'une par rapport à l'autre.

9. Dispositif de maintien en position selon la revendication 8, **caractérisé en ce que** les deux chemins (41,42 ; 51,52) de chacune des crémaillères (7, 8) ont des dents (43, 44 ; 53, 54) ayant des angles de flancs (45 à 48 ; 55 à 58) disposés de façon opposée, afin de s'opposer à tout effort vertical longitudinal aux crémaillères.

10. Dispositif de maintien en position selon la revendication 1, **caractérisé en ce que** la crémaillère mobile (7) et la crémaillère fixe (8) sont en acier fritté.

11. Dispositif de maintien en position selon la revendication 1, **caractérisé en ce que** la crémaillère fixe (8) est en matière thermoplastique renforcée par des fibres de verre.

12. Dispositif de maintien en position selon la revendication 1, **caractérisé en ce que** le moyen élastique additionnel (10) est un ressort de compression en forme de rondelle élastique Belleville (92).

13. Dispositif de maintien en position selon la revendication 1, **caractérisé en ce que** le moyen élastique additionnel (10) est un ressort de compression à spires cylindriques (93).

14. Dispositif de maintien en position selon la revendication 1, **caractérisé en ce que** le moyen élastique additionnel (10) est un ressort de compression à spires coniques (94).

15. Dispositif de maintien en position selon la revendication 1, **caractérisé en ce que** le moyen élastique additionnel (10) est un ressort de compression constitué d'une tôle souple (95), qui comporte deux portions recourbées souples (100, 101).

## Patentansprüche

1. Vorrichtung zur Positionsbeibehaltung eines ersten Elements (1) in bezug auf ein als fest betrachtetes zweites Element (2), wobei das erste Element (1) und das zweite Element (2) durch ein Spannsystem (3) mit einer die beiden Elemente (1, 2) durchquerenden Spannachse (4) verbunden sind,
- wobei die Beibehaltungsvorrichtung eine feste Zahnstange (8), die gegen das zweite Element (2) angebracht ist, und eine mit dem ersten Element (1) verbundene bewegliche Zahnstange (7) umfaßt, derart, daß die bewegliche Zahnstange (7) und die feste Zahnstange (8) in der verriegelten Position miteinander in Eingriff treten können,
- wobei die Spannachse (4) die bewegliche Zahnstange (7) und die feste Zahnstange (8) durchquert,
- wobei eine Rückstellfeder (9) zwischen den Zahnstangen (7, 8) angeordnet ist, um die Trennung der Zahnstangen (7, 8) in der entriegelten Position herbeizuführen,
- **dadurch gekennzeichnet, daß** sie umfaßt:
- ein zusätzliches elastisches Mittel (10), das auf der Spannachse (4) angebracht ist, wobei das zusätzliche elastische Mittel (10) gegen die bewegliche Zahnstange (7) angeordnet ist, und auf der Seite eines Spannmittels (15), das an einem Ende der Spannachse (4) angebracht ist, und
- einen Bügel (12), der auf der Spannachse (4) zwischen dem zusätzlichen elastischen Mittel (10) und dem Spannmittel (15) angebracht ist;
- wobei das zusätzliche elastische Mittel (10) und der Bügel (12) geformt und eingerichtet sind derart, daß der Bügel (12) in der verriegelten Position des Spannsystems (3) zur Anlage gegen das zweite Element (2) gelangt, und
das zusätzliche elastische Mittel (10) zur Anlage gegen den gegen das Spannmittel (15) angeordneten Bügel (12) kommt und auf die bewegliche Zahnstange (7) einwirkt, um das vollständige Eindringen der beweglichen Zahnstange (7) in die feste Zahnstange (8) sicherzustellen.

2. Positionsbeibehaltungsvorrichtung nach Anspruch 1, **dadurch gekennzeichnet, daß** der einen U-förmigen Querschnitt aufweisende Bügel (12) umfaßt:
- einen Sockelteil (21) ,
- ein Loch (24), durch das die Spannachse (4) verläuft,
- sich von den Enden des Sockelteils (21) aus erstreckende und zum Sockelteil etwa senkrechte Flügel (22, 23), wobei die Flügel (22, 23) in einem Abstand voneinander größer als die Breite jeder der Zahnstangen (7, 8) sind derart, daß sich die bewegliche Zahnstange (7) im Bügel (12) anbringen läßt, und
- wobei die Flügel (22, 23) des Bügels (12) in der verriegelten Position des Spannsystems (3) die feste Zahnstange (8) umgeben, um ein positives Widerlager des Spannsystems (3) zu erhalten.

3. Positionsbeibehaltungsvorrichtung nach Anspruch 2, **dadurch gekennzeichnet, daß** das zusätzliche elastische Mittel (10) eine Druckfeder in Tellerform (91), die auf der Spannachse (4) angebracht ist und die im Bügel (12) untergebracht ist, zwischen dem Sockelteil (21) des Bügels (12) und der beweglichen Zahnstange (7) umfaßt.

4. Positionsbeibehaltungsvorrichtung nach einem beliebigen der Ansprüche 1 bis 3, **dadurch gekennzeichnet, daß** die zwischen den Zahnstangen (7, 8) angeordnete Rückstellfeder (9) eine Feder aus flexiblem Blech ist, die umfaßt:
- einen zentralen Abschnitt (81), in dem ein Durchgangsloch (88) ausgespart ist, durch das die Spannachse (4) verläuft, wobei der zentrale Abschnitt (81) gegen die bewegliche Zahnstange (7) angeordnet ist,
- gebogene flexible Abschnitte (82, 83, 84, 85), die auf beiden Seiten des zentralen Abschnitts (81) angeordnet sind, wobei sich die gebogenen flexiblen Abschnitte (82, 83, 84, 85) an der festen Zahnstange (8) abstützen, und
- wobei sich zwei Lappenansätze (86, 87) zur beweglichen Zahnstange (7) erstrecken derart, daß die beiden Lappenansätze (86, 87) jeweils in in der beweglichen Zahnstange (7) ausgesparten Schlitzen (49, 50) in Eingriff treten derart, daß die Rückstellfeder (9) mit der beweglichen Zahnstange (7) drehverbunden wird.

5. Positionsbeibehaltungsvorrichtung nach einem beliebigen der vorhergehenden Ansprüche, **dadurch gekennzeichnet, daß** :
- das erste Element (1) ein Lenksäulenrohrkörper für ein Kraftfahrzeug ist, wobei die Säule in wenigstens einer der Höhen- und Tiefeneinstellrichtungen in der vertikalen Ebene einstellbar ist;
- eine Lenkwelle (5) drehfrei im Rohrkörper angebracht ist;
- das zweite Element (2) ein an der Fahrzeugkarosserie (6) befestigtes Halterungselement ist; und
- das erste Element (1) in einem Einstellsystem für die Position der Lenksäule im zweiten Element (2) angeordnet ist, das Spannsystem in der entriegelten Position ist, das erste Element (1) an einer gewünschten Position in bezug auf das zweite Element (2) mittels des Einstellsystems angeordnet ist und das erste Element (1) in bezug auf das zweite Element (2) in der verriegelten Position durch das Verriegelungssystem (3) blockiert ist.

6. Positionsbeibehaltungsvorrichtung nach Anspruch 1 bis 5, **dadurch gekennzeichnet, daß** die feste Zahnstange (8), die gegen das zweite Element (2) angebracht ist, aus einer Platte (59) besteht, die umfaßt:
- eine Abstützfläche (60), die mit Positionsansätzen (61) im zweiten Element (2) versehen ist,
- zwei Kontaktflächen (63, 64), die in der Einstellrichtung orientiert sind und die entlang gegenüberliegender Seiten eines Langlochs (62) angeordnet sind, was die Durchführung der Spannachse (4) und das Durchfedern der Spannachse (4) zur Zeit der Positionseinstellung gestattet; und
- zwei Bahnen (51, 52), die mit Zähnen (53, 54) versehen sind, die in der Einstellrichtung orientiert sind und sich jeweils entlang der Kontaktflächen (63, 64) erstrecken.

7. Positionsbeibehaltungsvorrichtung nach Anspruch 5, **dadurch gekennzeichnet, daß** die bewegliche Zahnstange (7), die mit dem ersten Element (1) verbunden ist, aus einer Platte (37) besteht, die umfaßt:
- ein Loch (36), durch das die Spannachse (4) verläuft,
- eine Abstützfläche (38) für das zusätzliche elastische Mittel (10),
- zwei Kontaktflächen (39) und (40) der Rückstellfeder (9), die um das Durchgangsloch (36) angeordnet sind,
- zwei Bahnen (41, 42), die mit Zähnen (43, 44) versehen sind, die in der Einstellrichtung orientiert sind und sich entlang der Kontaktflächen (39, 40) jeweils erstrecken, und
- zwei zentrale Schlitze (49, 50), die einander gegenüberliegen, jeweils bestimmt zur Aufnahme der beiden Lappenansätze (86, 87) der Rückstellfeder (9).

8. Positionsbeibehaltungsvorrichtung nach Anspruch 6 oder 7, **dadurch gekennzeichnet, daß** jede der Zahnstangen (7, 8) unsymmetrische Zähne (43, 44; 53, 54) umfaßt, die jeweils Flanken (45, 47; 55, 57) aufweisen, die sehr wenig in bezug auf eine Ebene senkrecht zu den Zahnstangenkontaktflächen (39, 40; 63, 64) geneigt sind und die einen Flankenwinkel α kleiner als der Winkel entsprechend einem Reibungskoeffizienten der beiden Zahnstangen (7, 8) in bezug aufeinander bilden.

9. Positionsbeibehaltungsvorrichtung nach Anspruch 8, **dadurch gekennzeichnet, daß** die beiden Bahnen (41, 42; 51, 52) jeder der Zahnstangen (7, 8) Zähne (43, 44; 53, 54) aufweisen, die Flankenwinkel (45 bis 48; 55 bis 58) aufweisen, die auf gegenüberliegende Weise angeordnet sind, so daß sie sich jeglicher Vertikalbeanspruchung längs zu den Zahnstangen entgegensetzen.

10. Positionsbeibehaltungsvorrichtung nach Anspruch 1, **dadurch gekennzeichnet, daß** die bewegliche Zahnstange (7) und die feste Zahnstange (8) aus Sinterstahl sind.

11. Positionsbeibehaltungsvorrichtung nach Anspruch 1, **dadurch gekennzeichnet, daß** die feste Zahnstange (8) aus glasfaserverstärktem thermoplastischem Material ist.

12. Positionsbeibehaltungsvorrichtung nach Anspruch 1, **dadurch gekennzeichnet, daß** das zusätzliche elastische Mittel (10) eine Druckfeder in Form einer Belleville-Federscheibe (92) ist.

13. Positionsbeibehaltungsvorrichtung nach Anspruch 1, **dadurch gekennzeichnet, daß** das zusätzliche elastische Mittel (10) eine Druckfeder mit zylindrischen Windungen (93) ist.

14. Positionsbeibehaltungsvorrichtung nach Anspruch 1, **dadurch gekennzeichnet, daß** das zusätzliche elastische Mittel (10) eine Druckfeder mit konischen Windungen (94) ist.

15. Positionsbeibehaltungsvorrichtung nach Anspruch 1, **dadurch gekennzeichnet, daß** das zusätzliche elastische Mittel (10) eine Druckfeder ist, die aus einem flexiblen Blech (95) besteht, das zwei gebogene flexible Abschnitte (100, 101) umfaßt.

## Claims

1. A device for holding a first member (1) in position relative to a second member considered fixed (2), the first member (1) and second member (2) being connected by a clamping system (3) having a clamping pin (4) passing through the two members (1, 2),
- the holding device comprising a fixed rack (8) mounted against the second member (2) and a mobile rack (7) connected to the first member (1), so that the mobile rack (7) and the fixed rack (8) can interengage in a locked position,
- the clamping pin (4) passing through the mobile rack (7) and the fixed rack (8),
- a return spring (9) being disposed between the racks (7, 8) to cause separation of said racks (7, 8) in an unlocked position,
**characterized in that** it comprises:
- additional spring means (10) mounted on the clamping pin (4), said additional spring means (10) being arranged against the mobile rack (7), and on the side of a clamping means (15) mounted on an end of the clamping pin (4); and
- a bracket (12) mounted on the clamping pin (4) between the additional spring means (10) and said clamping means (15);
- the additional spring means (10) and the bracket (12) being shaped and adapted so that in the locked configuration of the clamping system (3), the bracket (12) bears against the support member (2), and the additional spring means (10) bears against said bracket (12) arranged against said clamping means (15), and beases on the mobile rack (7) to assure complete interpenetration of the mobile rack (7) in the fixed rack (8).

2. The holding device according to claim 1, **characterized in that** the bracket (12) having a U-shape section comprises:
- a base (21),
- a hole (24) through which the clamping pin (4) passes,
- flanges (22, 23) extending from the ends of the base (21) and substantially perpendicular to said base,
- the flanges (22, 23) being at a distance from each other greater than the width of each of the racks (7, 8) so that the mobile rack (7) can be mounted in the bracket (12), and
- in the locked position of the clamping system (3), the flanges (22, 23) of the bracket (12) surrounding the fixed rack (8) to obtain positive abutment of the clamping system (3).

3. The holding device according to claim 2, **characterized in that** the additional spring means (10) comprises a cup-shape compression spring (91) which is mounted on the clamping pin (4), and which is accommodated in the bracket (12), between the base (21) of the bracket (12) and the mobile rack (7).

4. The holding device according to any one of claims 1 to 3, **characterized in that** the return spring (9) disposed between the racks (7, 8) is a flexible sheet-metal spring which has:
- a central portion (81) containing a hole (88) through which the clamping pin (4) passes, the central portion being disposed against the mobile rack (7),
- flexible curved portions (82, 83, 84, 85) arranged on respective opposite sides of said central portion (81), the flexible curved portions (82, 83, 84, 85) bearing on the fixed rack (8), and
- two tongues (86, 87) extending toward the mobile rack (7), so that said two tongues (86, 87) engage respectively in notches (49, 50) defined in said mobile rack (7) to couple the return spring (9) in rotation to said mobile rack (7).

5. The holding device according to any one of the preceding claims, **characterized in that**:
- the first member (1) is an automobile vehicle steering column body tube, said column being adjustable at least in height and in depth in the vertical plane;
- a steering shaft (5) is mounted to rotate freely in said body tube;
- the second member (2) is a support member fixed to the chassis of the vehicle (6); and
- in a system for adjusting the position of the steering column, the first member (1) is disposed in the second member (2), the clamping system is in an unlocked position, the first member (1) is placed at the required position relative to the second member (2) by means of the adjustment system, and the first member (1) is immobilized relative to the second element (2) in the locked position by the clamping system (3).

6. The holding device according to any one of claims 1 to 5, **characterized in that** the fixed rack (8) which is mounted against the second member (2) is constituted by a plate (59) which has:
- a bearing face (60) which is provided with positioning studs (61) in the second member (2),
- two contact faces (63, 64) which are oriented in the adjustment direction, and which are disposed on opposite sides of an oblong hole (62) through which the clamping pin (4) can pass and thereby allowing movement of said clamping pin (4) during positional adjustment; and
- two paths (51, 52) provided with teeth (53, 54) oriented in the adjustment direction and extending along the contact faces (63, 64) respectively.

7. The holding device according to claim 5, **characterized in that** the mobile rack (7), which is connected to the first member (1), is constituted by a plate (37) which has:
- a hole (36) through which the clamping pin (4) passes,
- a bearing face (38) for the additional spring means (10),
- two contact faces (39, 40) for the return spring (9) disposed around the hole (36),
- two paths (41, 42) with teeth (43, 44), oriented in the adjustment direction, and extending along the contact faces (39, 40) respectively, and
- two opposite central notches (49, 50) adapted to receive the two tongues (86, 87) of the return spring (9) respectively.

8. The holding device according to claim 6 or 7, **characterized in that** each of the racks (7, 8) comprises asymmetric teeth (43,44 ; 53,54) each having flanks (45,47 ; 55,57) which are very slightly inclined to the plane perpendicular to the contact rack faces (39,40 ; 63,64) and which shape a flank angle (α) less than the angle corresponding to a coefficient of friction between the two racks (7, 8).

9. The holding device according to claim 8, **characterized in that** the two paths (41,42 ; 51,52) of each of the racks (7, 8) have teeth (43,44 ; 53,54) whose flank angles (45 to 48 ; 55 to 58) are opposed in order to oppose any longitudinal vertical force to the racks.

10. The holding device according to claim 1, **characterized in that** the mobile rack (7) and the fixed rack (8) are made of sintered steel.

11. The holding device according to claim 1, **characterized in that** the fixed rack (8) is made of a thermoplastics material reinforced with glass fiber.

12. The holding device according to claim 1, **characterized in that** the additional spring means (10) is a compression spring in the form of a "Belleville" spring washer (92).

13. The holding device according to claim 1, **characterized in that** the additional spring means (10) is a cylindrical coil compression spring (93).

14. The holding device according to claim 1, **characterized in that** the additional spring means (10) is a conical coil compression spring (94).

15. The holding device according to claim 1, **characterized in that** the additional spring means (10) is a compression spring constituted by a flexible sheet-metal (95), which has two flexible curved portions (100, 101).
